## Europäisches Patentamt
## European Patent Office
## Office européen des brevets

(11) Veröffentlichungsnummer: **0 180 891**
**B1**

(12) # EUROPÄISCHE PATENTSCHRIFT

(45) Veröffentlichungstag der Patentschrift:
**12.07.89**

(51) Int. Cl.⁴: **H 02 K 44/06**

(21) Anmeldenummer: **85113705.9**

(22) Anmeldetag: **28.10.85**

(54) Ringförmige lineare Induktionstauchpumpe zur Förderung von Flüssigmetall.

(30) Priorität: **08.11.84 DE 8432755 U**

(43) Veröffentlichungstag der Anmeldung:
**14.05.86 Patentblatt 86/20**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**FR-A-1 593 007**
**FR-A-2 385 254**
**FR-A-2 396 449**
**FR-A-2 440 641**
**FR-A-2 545 293**
**GB-A-1 052 260**

(73) Patentinhaber: **INTERATOM Gesellschaft mit beschränkter Haftung, Friedrich- Ebert- Strasse, D-5060 Bergisch- Gladbach 1 (DE)**

(72) Erfinder: **Barzantny, Joachim, Im Wiesengrund 42, D-5067 Kürten- Eichhof (DE)**
Erfinder: **Cremer, Dieter, Immekeppeler Teich 8, D-5063 Overath (DE)**
Erfinder: **Grützmacher, Gerd, Hofstrasse 26, D-5000 Köln 80 (DE)**
Erfinder: **Allgeier, Erich, Dipl.- Ing., Pustenbergstiege 16, D-4300 Essen 16 (DE)**

(74) Vertreter: **Mehl, Ernst, Dipl.- Ing., Postfach 22 13 17, D-8000 München 22 (DE)**

EP 0 180 891 B1

## Beschreibung

Die vorliegende Erfindung betrifft eine Induktionspumpe zur Förderung von Flüssigmetall nach dem Oberbegriff des ersten Anspruchs. In Gießereien und Schmelzbetrieben werden in zunehmendem Maße wegen ihrer guten Regelbarkeit Induktionspumpen zur Förderung von Flüssigmetall eingesetzt. Dabei stellen sich je nach Anwendungsfall und Art der zu fördernden Schmelze ganz unterschiedliche Probleme.

Aus der DE-A-3 141 774 ist beispielsweise eine Induktionstauchpumpe bekannt, welche insbesondere für Anwendungen bei flüssigem Aluminium ausgelegt ist. Diese Auslegung berücksichtigt speziell, daß nur keramische Materialien einen dauernden Kontakt mit dem flüssigen Aluminium für längere Zeit überstehen können.

Viele Flüssigmetalle können jedoch auch in metallischen Behältern aus bestimmten Legierungen aufbewahrt werden, wodurch auch kompliziertere Formen der Strömungsführung in induktiven Pumpen möglich sind. Dies ist für Alkalimetalle seit langem aus der Reaktortechnik für natriumgekühlte Kernreaktoren bekannt, wo Induktionspumpen vielfach Anwendung finden. So ist beispielsweise aus der DE-C-3 204 462 eine sogenannte "Rundpumpe" bekannt, bei welcher in einer zylindersymmetrischen Anordnung um einen ringförmigen Pumpkanal außen konzentrische Induktionsspulen angeordnet sind.

Auch aus der FR-A-1 593 007 sind verschiedene Bauarten von ringförmigen Induktionspumpen bekannt. Bisher wurden jedoch Rundpumpen als Tauchpumpen nur für die niedrigschmelzenden Alkalimetalle ausgebildet und nicht für spezielle Anwendungen für höher schmelzende andere Metalle ertüchtigt. Handhabungs- und Wartungsprobleme für solche Anwendungen sind nicht gelöst.

Aus der FR-A-2 440 641 ist weiter eine Tauchpumpe für flüssiges Metall bekannt, welche einen von unten eingesetzten keramischen Verdrängungskörper aufweist. Die Form dieses Verdrängungskörpers und seine Befestigung ermöglichen jedoch keine einfache Reinigung und Wartung. Außerdem dient dieser Verdrängungskörper nicht als magnetischer Rückschluß, sondern soll eine Drehströmung aufgrund von schraubenlinienförmigen Kanälen in eine axiale Strömung umwandeln.

Ferner ist aus der FR-A-2 396 449 eine Tauchpumpe nach oben auswechselbaren Verdrängungskörper bekannt. Allerdings ist hier ein Aus- bzw. Einlaß seitlich angeordnet, wodurch zwar die Befestigung des Verdrängungskörpers einfacher wird, jedoch eine Verwendung als Tauchpumpe zur Förderung höher schmelzender Metalle erschwert wird.

Aufgabe der vorliegenden Erfindung ist ausgehend von Fig. 1 der FR-A-1 593 007 die Schaffung einer ringförmigen linearen Induktionspumpe, welche sich als Tauchpumpe zur Förderung von höherschmelzenden Flüssigmetallen, insbesondere von dem sehr reaktiven Magnesium und dessen Legierungen eignet. Dabei soll sowohl der sichere luftdichte Einschluß des Flüssigmetalles wie auch eine wirtschaftliche Förderung gewährleistet werden, wobei besonders Reinigungs- und Wartungsarbeiten erleichtet werden sollen.

Zur Lösung dieser Aufgabe wird eine Induktionspumpe nach dem ersten Anspruch vorgeschlagen. Diese Pumpe entspricht in ihrem prinzipiellen Aufbau in etwa den aus der Natriumtechnologie an sich bekannten Tauchpumpen, weist jedoch für die spezielle Anwendung die erfindungsgemäßen Besonderheiten auf.

Um die bei höherschmelzenden Metallen auftrehenden Probleme bei der Wartung zu beherrschen, wird vorgeschlagen, daß der Verdrängungskörper im Inneren der Pumpe auswechselbar und nach unten aus der Pumpe herausnehmbar sein soll. Diese neuartige Anbringung des Verdrängungskörpers erleichtert bei einem evtl. Verstopfen der Pumpe die Reinigungs- und Wartungsarbeiten. Eine verstopfte Pumpe ohne zerlegen "aufzutauen" wäre bei höherschmelzenden Metallen sehr schwierig.

Die Halterung des Verdrängungskörpers wird an seinem unteren Ende durch Stifte bewerkstelligt. Mit Hilfe solcher Stifte, von denen wenigstens 3 vorhanden sein müssen, läßt sich, wie anhand der Zeichnung näher erläutert wird, der Verdrängungskörper schnell und sicher haltern, wobei die Stifte beispielsweise durch Splinte schnell gesichert werden können. Weiterhin ist der Verdrängungskörper an seinem oberem Ende durch eine Zentriervorrichtung gehaltert. Da die Halterung durch die Stifte am unteren Ende nicht für alle Betriebszustände als ausreichend angesehen wird, kann das obere Ende des Verdrängungskörpers zusätzlich z. B. mit Zentrierstiften versehen werden, welche eine präzise Einhaltung seiner Lage ermöglichen. Diese Zentrierstifte haben allerdings, sofern sie am Verdrängungskörper befestigt sind, den Nachteil, daß ein Herausziehen des Verdrängungskörpers bei vollständig eingefrorener Pumpe nur schwer möglich sein wird. Bei nur teilweise zugesetzter Pumpe könnte jedoch der Verdrängungskörper trotz der Zentrierstifte durch geeignetes Drehe herausgezogen werden. Besser ist es jedoch, die Zentriervorrichtung innen am Außenrohr zu befestigen. In weiterer Ausgestaltung wird dazu im Anspruch 2 vorgeschlagen, daß der Verdrängungskörper ganz schwach konisch gestaltet ist und sich nach oben verjüngt. Diese Ausführung des Verdrängungskörpers, bei der beispielsweise eine Abweichung von 1° zur Senkrechten ausreicht, ermöglicht das Herausziehen des Verdrängungskörpers selbst bei "eingefrorener" Pumpe, d. h. bei in der Pumpe verbliebenem erstarrtem Schmelzmaterial.

In weiterer Ausgestaltung der Erfindung wird im Anspruch vorgeschlagen, daß die Pumpe innerhalb des flüssigmetallbeständigen Gehäuses eine thermische Isolierschicht aufweist, z. B. aus Kohlefasern oder Mineralfasermatten, und daß die Spulen und Magnetbleche über eine Luftverteilungseinrichtung kühlbar sind. Diese Ausgestaltung ermöglicht einen Betrieb der Pumpe auch in Metallschmelzen mit höherer Temperatur, beispielsweise in flüssigem Magnesium, ohne daß die Magnetbleche bzw. -spulen überhitzt werden. Dabei wird die Luft, wie anhand der Zeichnung näher erläutert, durch Verteilerrohre zugeführt und entlang der Spulen und Magnetkerne in das Innere des Gehäuses geblasen.

In weiterer Ausgestaltung der Erfindung wird im Anspruch 4 vorgeschlagen, daß das Innere des Verdrängungskörpers mit magnetisch leitendem Material in Stabform den magnetischen Rückschluß für die Spulen bildet. Dieser Aufbau ermöglicht eine verhältnismäßig einfache Fertigung und einen guten magnetischen Wirkungsgrad.

In spezieller Ausgestaltung der Erfindung wird im Anspruch 5 vorgeschlagen, daß das Material zumindest des Außenrohres des Pumpkanals unmagnetisch sein oder wenigs stens einen möglichst niedrigen Curie-Punkt aufweisen soll. Insbesondere beispielsweise für Magnesium können als Material des Außenrohres bestimmte Stähle verwendet werden welche jedoch im allgemeinen ferromagnetisch sind. Da das Magnetfeld der Spulen jedoch das Außenrohr durchdringen soll, kann dies nur durch Wahl eines Materials mit niedrigem Curie-Punkt gewährleistet werden. Liegt der Curie-Punkt niedriger als die niedrigste Betriebstemperatur der pumpe, so ist das Außenrohr im betrieb immer ummagnetisch und stört daher den Magnetfeldverlauf nicht.

In weiterer Ausgestaltung der Erfindung wird im Anspruch 6 vorgeschlagen, daß als Material für den Pumpkanal eine magnesiumbeständige Legierung ohne Nickelanteile, d. h. insbesondere ein nickelfreier Stahl gewählt werden soll. Ein solches Material erfüllt die o. g. Bedingungen. Auch das Außengehäuse und evtl. Schweißnähte sollten aus solchem Material hergestellt sein.

In zusätzlicher Ausgestaltung der Erfindung wird im Anspruch 7 vorgeschlagen, daß der Pumpkanal sich an seinem oberen Ende konisch zu einem Rohr verjüngt und aus dem Gehäuse der Pumpe so herausgeführt ist, daß um das herausgeführte Rohr herum genügend Raum für die Anbringung einer an das Pumpengehäuse anschließenden Begleitheizung vorhanden ist. Rohrleitungen für Flüssigmetalle mit hohem Schmelzpunkt müssen, sofern sie über längere Strecken führen, mit einer Begleitheizung versehen sein, um ein Einfrieren der Rohrleitungen und zu große thermische Spannungen zu vermeiden. Um gerade auch den Auslaß der Pumpe vor thermischen Schwankungen zu schützen, sollte die Begleitheizung möglichst nahe an das Pumpengehäuse herangeführt werden, was durch die Ausgestaltung gemäß dem Anspruch 7 ermöglicht wird.

Im Anspruch 8 wird ferner vorgeschlagen, daß die Pumpe an ihrem Auslaß bzw. am Ende eines daran anschließenden Dosierrohres mit einem induktiven Füllstandsmesser ausgestattet ist. Da ein Zurückfließen von Magnesium in die Pumpe bei einem Förderstop vermieden werden soll, muß die Förderleistung der Pumpe so geregelt werden, daß der Flüssigmetallspiegel am oberen Ende der Pumpe bzw. am Ende des Dosierrohres gehalten werden kann. Die dazu notwendigen Meßwerte liefert der induktive Füllstandsmesser.

In weiterer Ausgestaltung der Erfindung wird im Anspruch 9 vorgeschlagen, daß Anteil und Anordnung der Induktionsspulen so gewählt sind, daß eine Förderung und präzise Dosierung auch bei niedrigem Flüssigmetallspiegel möglich ist. Daher ist die Pumpe mit vielen verhältnismäßig flachen Spulen ausgestattet, deren unterste möglichst nahe zum Boden des Gehäuses angeordnet ist. Auch bei niedrigem Flüssigmetallspiegel liegen daher noch genügend Spulen im Flüssigmetallbereich, so daß ein Förderbeginn möglich ist.

Ein Ausführungsbeispiel der Erfindung mit seinen wesentlichen Teilen ist in der Zeichnung dargestellt, und zwar zeigen

Figur 1 den Aufbau einer erfindungsgemäßen Pumpe,
Figur 2, 3 und 4 Varianten der zentriervorrichtung am oberen Ende des Verdrängungskörpers.

Das zu fördernde Flüssigmetall wird in einem ringspaltförmigen Förderkanal 1 durch magnetische wanderfelder aufwärts gefördert. Der ringspaltförmige Förderkanal 1 wird außen durch ein Außenrohr 3 und innen durch den Verdrängungskörper 4 begrenzt. Am unteren Ende ist das Außenrohr 3 offen, so daß dort ein Einlaß 2 für das Füssigmetall gebildet wird. Das Innere 5 des Verdrängungskörpers 4 ist mit magnetisch leitendem Material angefüllt, vorzugsweise mit dünnen Stäben aus ferromagnetischem Material mit hohem Curie-Punkt. Der Förderkanal 1 ist außen umgeben von konzentrischen ringförmigen Magnetspulen 6, wobei diese Spulen in an sich bekannter Weise von kammförmigen Magnetblechen 7 umgeben sind. Die gesamte Pumpenanordnung ist außen mit einer thermischen Isolierung 8 und einer flüssigmetallbeständigen Hülle 9 versehen. Die flüssigmetallbeständige Hülle 9 ist mit dem Außenrohr 3 des Förderkanals 1 dicht verschweißt, wodurch ein Eindringen von Flüssigmetall in das elektrische System der pumpe sicher verhindert wird. An ihrem oberen Ende ist die Pumpe mit Versorgungsrohren 10, 11 versehen, auf welchem auch Zusatzaggregate und Anschlußkästen montiert sind. In dem Rohr 10 sind die elektrischen Zuleitungen 12 zu den Spulen 6, welche üblicherweise mit Mehrphasen-Wechselstrom versorgt werden, untergebracht. Außerdem befindet sich darin eine Luftzuleitung 13, welche über ein oder mehrere Verteilerrohre 14a, 14b - in der Zeichnung versetzt dargestellt - die Kühlung der Spulen 6 und Magnetbleche 7 sicherstellen soll. Dazu sind die Verteilerrohre 14a, 14b mit Luftauslaßöffnungen 15 in Richtung der Spulen versehen. Außerdem ist ein Luftauslaß 16 am unteren Ende der Verteilerrohre 14a, 14b vorhanden. Die eingespeiste Luft strömt an den Spulen 6 und zwischen den Magnetblechen 7 entlang zum Auslaß 17, der durch das Rohr 11 nach außen führt. Der Verdrängungskörper 4 ist an seinem unteren Ende durch drei Stifte 18 gehalten, welche in entsprechende Bohrungen im Verdrängungskörper einsetzbar sind. Außen werden die Stifte in Verlängerungen des Pumpengehäuses 9 gehaltert und zur Sicherung beispielsweise versplintet. Zur Zentrierung des oberen Endes des Verdrängungskörpers 4 sind fernerhin drei Zentrierstifte 19 am Verdrängungskörper befestigt, welche ihn in seiner Lage fixieren und ein Hin- und Herschlagen in der Strömung verhindern. Oberhalb des Spulensystems geht der ringspaltförmige Förderkanal 1 in einem sich konisch verjüngenden Übergangsstück 20 wieder in eine eingache Rohrleitung über, welche oben aus der Pumpe herausragt. Dabei ist der Raum 21 außen um das Übergangssrück 20 herum von allen mechanischen Einbauten freigehalten, damit eine Begleitheizung möglichst nahe an die Pumpe herangeführt werden kann. Die gesamte Pumpe ist mit Hilfe eines Flansches 22 dichtend in den Deckel eines Schmelzenbehälters einsetzbar, so daß eine Förderung aus einem dichten, inerten System möglich ist.

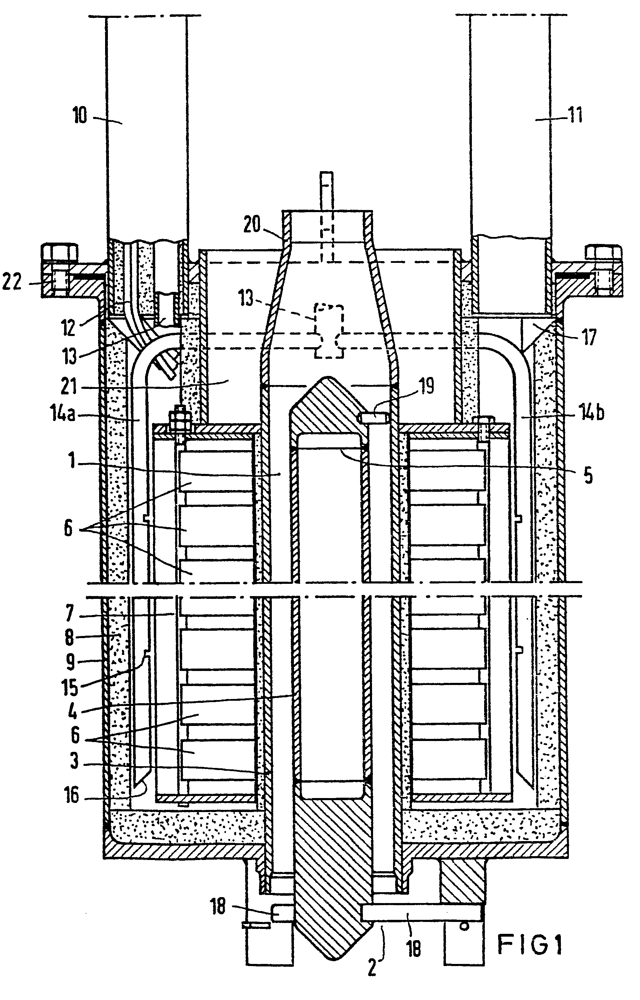

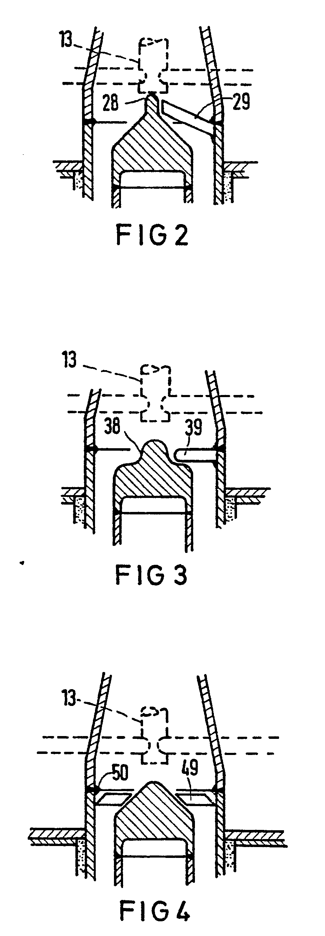

In dem Figuren 2, 3 und 4 sind Ausschnitte aus Fig. 1 dargestellt, die Varianten der zentriervorrichtung am oberen Ende des Verdrängungskörpers 4 zeigen.

Figur 2 zeigt an dem Außenrohr 3 befestigte Zentrierstifte 29, welche die entsprechend geformte Spitze 28 des des Verdrämungskörpers 4 in ihrer Einbaulage fixieren, ohne jedoch den Ein- und Ausbau des Verdrängungskörpers zu behindern. Es sollten drei oder mehr Zentrierstifte 29 vorhanden sein.

Figur 3 zeigt etwas anders angeordnete Zentrierstifte 39, welche die Spitze 38 des Verdrängungskörpers 4 halten. Ihre Wirkungsweise entspricht der oben beschriebenen.

In Figur 4 ist statt der Zentrierstifte ein Zentrierring 49 mit mindestens drei Stegen dargestellt. Dieser Ring 49 ist zusammen mit dem Verdrängungskörper 4 einbaubar und benötigt einen Wulst 50 innen am Außenrohr 3 als Anschlag. Der Ring 49 sollte dem Strömungsguerschnitt nicht zu sehr verringern.

Die erfindungsgemäße Ausführung der Pumpe eignet sich besonders für das kontinuierliche oder portionsweise Vergießen von Magnesium und Magnesium-Legierungen.

## Patentansprüche

1. Ringförmige lineare Induktionspumpe mit einem zentralen Einlaß (2) und einem zentralen Auslaß zur Förderung von Flüssigmetallen, insbesondere Magnesium und dessen Legierungen, wobei ein Pumpkanal (1) von ringförmigem Querschnitt außen von mehreren zwischen kammförmigen Magnetblechen (7) angeordneten, konzentrischen Spulen (6) zur Erzeugung magnetischer Wanderfelder umgeben ist und innen einen Verdrängungskörper (4) aufweist, der als magnetischer Rückschluß dient, und wobei Einrichtungen zur Kühlung der Spulen (6) und Magnetbleche (7) vorgesehen sind, gekennzeichnet durch folgende Merkmale:

a) die Induktionspumpe ist als Tauchpumpe ausgebildet mit dem Einlaß (2) an der Unterseite;
b) der Verdrängungskörper (4) ist nach unten aus dem Einlaß (2) der Pumpe herausnehmbar;
c) der Verdrängungskörper (4) ist an seinem unteren Ende durch Stifte (18) fixierbar und an seinem oberen Ende durch eine Zentriervorrichtung (19; 29; 39; 49) gehalten.

2. Induktionspumpe nach Anspruch 1, dadurch gekennzeichnet, daß der Verdrängungskörper (4) ganz schwach konisch gestaltet ist und sich nach oben verjüngt.

3. Induktionspumpe nach Anspruch 1 oder 2, dadurch gekennzeichnet, daß innerhalb des flüssigmetallbeständigen Gehäuses (9) eine thermische Isolierschicht (8), z. B. aus Fasergewebe, vorhanden ist, und daß die Spulen (6) und Magnetbleche (7) über eine Luftverteilungseinrichtung (13, 14a, 14b, 15, 16) kühlbar sind.

4. Induktionspumpe nach Anspruch 1, 2 oder 3 dadurch gekennzeichnet, daß das Innere des Verdrängungskörpers (4) mit magnetisch leitendem Material (5) in Stabform ausgefüllt ist, welches den magnetischen Rückschluß für die Spulen bildet.

5. Induktionspumpe nach einem der vorhergehenden Ansprüche, dadurch gekennzeichnet, daß das Material zumindest des Außenrohres (3) des Pumpkanals (1) einen möglichst niedrigen Curie-Punkt aufweist, bzw. aus unmagnetischem Werkstoff besteht.

6. Induktionspumpe nach einem der vorherigen Ansprüche, dadurch gekennzeichnet, daß das Material des Pumpkanals (1) und/oder des Außengehäuses (9) ggf. einschließlich der Schweißnähte eine magnesiumbeständige Legierung ohne Nickelanteil ist.

7. Induktionspumpe nach einem der vorherigen Ansprüche, dadurch gekennzeichnet, daß der Pumpkanal (1) sich an seinem oberen Ende (20) konisch verjüngt und aus dem Gehäuse der Pumpe so herausgeführt ist, daß um das Ende herum genügend Raum für die Anbringung einer an das Pumpengehäuse anschließenden Begleitheizung vorhanden ist.

8. Induktionspumpe nach einem der vorherigen Ansprüche, dadurch gekennzeichnet,

daß die Pumpe an ihrem Auslaß (20) bzw. am Ende eines daran anschließenden Dosierrohres mit einem induktiven Füllstandsmesser ausgestattet ist.

9. Induktionspumpe nach einem der vorherigen Ansprüche,

<u>dadurch gekennzeichnet,</u>

daß Anzahl und Anordnung der Induktionsspulen (6) so gewählt sind, daß eine Förderung und präzise Dosierung auch bei niedrigem Flüssigmetallspiegelmöglich ist.

## Claims

1. Annular linear induction pump having a central inlet (2) and a central outlet for conveying liquid metals, more particularly magnesium and its alloys, wherein a pump channel (1) of annular cross-section is surrounded on the outside by several concentric coils (6), which are arranged between comb-shaped magnetic sheets (7) for the purpose of generating magnetic moving fields, and has on the inside a displacement body (4) which serves as a magnetic return path, and wherein there are provided devices for the purpose of cooling the coils (6) and magnetic sheets (7), characterised by the following features:

a) the induction pump is developed as a submersible pump with the inlet (2) on the underside;

b) the displacement body (4) can be removed downwards out of the inlet (2) of the pump;

c) the displacement body (4) can be fixed at its lower end by means of pins (18) and is held at its upper end by means of a centering device (19; 29; 39; 49).

2. Induction pump according to claim 1, characterised in that the displacement body (4) is shaped so that it is quite slightly conical and tapers upwards.

3. Induction pump according to claim 1 or 2, characterised in that inside the liquid metal resistant housing (9) there is a thermal insulating layer (8), e.g. of fibrous tissue, and in that the coils (6) and magnetic sheets (7) can be cooled by means of an air distribution device (13, 14a, 14b,15, 16).

4. Induction pump according to claim 1, 2 or 3, characterised in that the inside of the displacement body (4) is filled in with magnetically conductive material (5) in bar form, which establishes the magnetic return path for the coils.

5. Induction pump according to one of the preceding claims, characterised in that the material of at least the outer tube (3) of the pump channel (1) has a Curie point which is as low as possible and/or is made of non-magnetic material.

6. Induction pump according to one of the preceding claims, characterised in that the material of the pump channel (1) and/or the outer housing (9), if applicable including the welded seams, is a magnesium-resistant alloy without nickel content.

7. Induction pump according to one of the preceding claims, characterised in that the pump channel (1) tapers conically at its upper end (20) and is brought out of the housing of the pump so that there is sufficient space about the end for the provision of an incidental heating system connected to the pump housing.

8. Induction pump according to one of the preceding claims, characterised in that the pump is fitted, at its outlet (20) or at the end of a dosing tube connected thereto, with an inductive level meter.

9. Induction pump according to one of the preceding claims, characterised in that the number and arrangement of the induction coils (6) are selected so that conveyance and precise dosage are possible even when there is a low liquid metal level.

## Revendications

1. Pompe à induction linéaire, du type annulaire, comprenant une admission centrale (2) et une évacuation centrale pour véhiculer des métaux liquides, notamment du magnésium et ses alliages, un canal de pompage (1) de section transversale annulaire étant entouré à l'extérieur de plusieurs bobines concentriques (6) disposés entre des tôles magnétiques (7) en forme de peigne, pour produire des champs magnétiques progressifs et comportant à l'intérieur un corps de refoulement (4), qui sen à la fermeture du circuit magnétique, des dispositifs de refroidissement des bobines (6) et des tôles magnétiques (7) étant prévus, remarquable par les caractéristiques suivantes:

a) la pompe à induction est constituée en pompe immergée avec l'admission (2) du côté inférieur;

b) le corps de refoulement (4) peut être enlevé de la pompe par le bas par l'admission (2);

c) le corps de refoulement (4) peut être immobilisé à son extrémité inférieure par des broches (8) et est maintenu à son extrémité supérieure par un dispositif de centrage (19; 29; 39; 49).

2. Pompe à induction suivant la revendication 1, caractérisée en ce que le corps de refoulement (4) est conformé de manière très légèrement conique et se rétrécit vers le haut.

3. Pompe à induction suivant la revendication 1 ou 2, caractérisée en ce que il est prévu, à l'intérieur de l'enveloppe (9) résistant au métal liquide, une couche isolante thermiquement (8) par exemple en tissu fibreux, et en ce que les bobines (6) et les tôles magnétiques (7) peuvent être refroidies par un dispositif de répartition de l'air (13, 14a, 14b, 15, 16).

4. Pompe à induction suivant la revendication 1 ou 3,

caractérisée en ce que

l'intérieur du corps de refoulement (4) est empli de matériau magnétiquement conducteur (5) sous forme de barreau, qui forme le circuit magnétique des bobines.

5. Pompe à induction suivant l'une des revendications précédentes,

caractérisée en ce que

la matière d'au moins le tube extérieur (3) du canal de pompage (1) a un point de Curie aussi bas que possible ou est en un matériau amagnétique.

6. Pompe à induction suivant l'une des revendications précédentes,

caractérisée en ce que

le matériau du canal de pompage (1) et/ou de l'enveloppe extérieure (9) est, y compris les cordons de soudure en un alliage résistant au magnésium, sans teneur en nickel.

7. Pompe à induction suivant l'une des revendications précédentes,

caractérisée en ce que

le canal de pompage (1) se rétrécit coniquement à son extrémité supérieure (20) et sort de l'enveloppe de la pompe de manière à avoir suffisamment de place autour de l'extrémité pour le montage d'un chauffage d'appoint se raccordant à l'enveloppe de la pompe.

8. Pompe à induction suivant l'une des revendications précédentes,

caractérisée en ce que

la pompe est munie, sur sa sortie (20) ou à l'extrémité d'un tube de dosage qui s'y raccorde, d'un dispositif de mesure du niveau par induction.

9. Pompe à induction suivant l'une des revendications précédentes,

caractérisée en ce que

le nombre et la disposition des bobines d'induction (6) sont choisis de manière à rendre possible un transport et un dosage précis, même lorsque le niveau du métal liquide est bas.

FIG 1

FIG 2

FIG 3

FIG 4